# EUROPEAN PATENT SPECIFICATION

(11) **EP 2 896 303 B1**
(45) Date of publication and mention of the grant of the patent: **26.12.2018**
(21) Application number: 13837400.4
(22) Date of filing: 11.09.2013
(51) Int. Cl.: A23L 17/50, A23L 17/00, A23L 17/40

(54) **METHOD FOR PRODUCING PROCESSED AQUATIC FOOD AND ENZYME PREPARATION FOR MODIFYING PROPERTY OF PROCESSED AQUATIC FOOD**
VERFAHREN ZUR HERSTELLUNG VERARBEITETER AQUATISCHER LEBENSMITTEL UND ENZYMPRÄPARAT ZUR MODIFIZIERUNG VON EIGENSCHAFTEN VERARBEITETER AQUATISCHER LEBENSMITTEL
PROCÉDÉ POUR PRODUIRE UN ALIMENT TRANSFORMÉ D'ORIGINE AQUATIQUE ET PRÉPARATION ENZYMATIQUE POUR MODIFIER DES CHARACTERISTIQUES DE L'ALIMENT TRANSFORMÉ D'ORIGINE AQUATIQUE

(30) Priority: 12.09.2012 JP 2012200048
(43) Date of publication of application: 22.07.2015
(73) Proprietor: Ajinomoto Co., Inc., Tokyo 104-8315 (JP)
(72) Inventor: SATO, Hiroaki, Kawasaki-shi Kanagawa 210-8681 (JP); NAKAGOSHI, Hiroyuki, Kawasaki-shi Kanagawa 210-8681 (JP); KAWAUCHI, Masato, Tokyo 108-0074 (JP)
(74) Representative: Strehl Schübel-Hopf & Partner
(86) International application number: PCT/JP2013/075217
(87) International publication number: WO 2014/042279

(56) References cited:
- CN-A- 101 731 299
- DE-A1-102005 051 713
- JP-A- S 506 744
- JP-A- H0 998 746
- JP-A- H1 057 019
- JP-A- S6 167 462
- JP-A- S6 344 866
- JP-A- H08 154 630
- JP-A- H10 286 059
- JP-A- S60 199 339
- JP-A- S63 105 657
- JP-A- 2000 060 431
- JP-A- 2000 125 811
- JP-A- 2002 051 693
- JP-A- 2003 235 520
- JP-A- 2006 055 044
- JP-A- 2007 014 248
- JP-B1- S5 019 617
- CHUN MING WONG ET AL: "Glucose oxidase: natural occurrence, function, properties and industrial applications", APPLIED MICROBIOLOGY AND BIOTECHNOLOGY, SPRINGER, BERLIN, DE, vol. 78, no. 6, 11 March 2008 (2008-03-11) , pages 927-938, XP019586374, ISSN: 1432-0614
- DATABASE FSTA [Online] INTERNATIONAL FOOD INFORMATION SERVICE (IFIS), FRANkFURT-MAIN, DE; 1978, LEE K H ET AL: "Inhibition of browning reactions during storage of dried oyster. I. Inhibitors and treatment conditions. (translated)", XP002755175, Database accession no. FS-1978-12-R-0666 & LEE K: "Inhibition of browning reactions during storage of dried oyster (translated)", BULLETIN OF THE KOREAN FISHERIES SOCIETY, vol. 10, no. 1, 1977, pages 11-15,
- GRANT C L ET AL: "Minor element composition of yeast extract", JOURNAL OF BACTERIOLOGY, AMERICAN SOCIETY FOR MICROBIOLOGY, US, vol. 84, 1 October 1962 (1962-10-01), pages 869-870, XP002418757, ISSN: 0021-9193
- DONDERO M ET AL.: 'Glucose Oxidase/Catalase Improves Preservation of Shrimp (Heterocarpus reedi).' J. FOOD SCI. vol. 58, no. 4, 1993, pages 774 - 779, XP055189173
- KAZUTOSHI YOSHIDA: 'Beer Kobo' AQUA CULTURE MAGAZINE vol. 45, no. 4, 20 March 2008, pages 75 - 78, XP008176327
- KANTT CA ET AL.: 'Glucose Oxidase/Catalase Solution for On-board Control of Shrimp Microbial Spoilage: Model Studies.' J. FOOD SCI. vol. 58, no. 1, 1993, pages 104 - 107, XP001052876

## Description

### Technical Field

The present invention relates to a method for producing a processed aquatic food comprising adding a glucose oxidase and a metal-containing yeast, such as iron-containing yeast, to a processed aquatic food, and an enzyme preparation for modifying a property of a processed aquatic food.

### Background Art

It is attempted to improve yield of processed aquatic products, such as fishery paste products including boiled fish paste, and shrimp (prawn) processed foods, by adding water, and thereby reduce production costs of the products. However, the physical properties of food products of which yield is improved in such a manner as mentioned above significantly deviate from the original physical properties thereof, and therefore techniques for compensating the physical properties are important. Furthermore, the physical properties of processed aquatic products such as shellfish processed products also significantly deviate from the original physical properties via freezing and thawing, and therefore techniques for compensating the physical properties are also important for such products. There are so far known techniques for improving a physical property via a protein crosslinking reaction using transglutaminase, or an oxidation reaction that crosslinks SH groups of proteins to form disulfide bonds (S-S bonds).

In the production of shrimp processed foods, improvement in the yield of shrimp directly affects the production cost, and therefore it is indispensable. Thus, a yield-improving agent is frequently used. It is known that if shrimp is subjected to a heat treatment, juiciness is lost, and feel in the mouth (mouthfeel) of the shrimp changes to hard, dry, and crumbling feel. In order to solve this problem, several attempts have been made, and a method of treating shrimp with an alkali agent such as phosphoric acid salt and pH adjustor is generally used.

Japanese Patent Laid-open (KOKAI) No. 2003-235520 discloses a method for improving mouthfeel by using a surface-improving agent for shrimp containing potassium carbonate, calcium oxide, tripotassium citrate, trisodium citrate, sodium chloride, monosodium glutamate, and water. However, if shrimp is treated with such an alkali agent or the like, the "yield" of shrimp is greatly improved, but mouthfeel becomes flabby one due to absorbed water, and the physical property unique to shrimp, i.e. "fibrous feel" (strength of resilience repeatedly and intermittently sensed with teeth for many layers at the time of biting shrimp), is reduced, resulting in mouthfeel greatly different from the original mouthfeel of shrimp. In particular, for foods for which the original mouthfeel of shrimp is desired, such as shrimp cutlet and fried shrimp, techniques for modifying the flabby mouthfeel are especially important.

Japanese Patent Laid-open No. 63-44866 discloses a method for preventing color fade of fish meat etc. by treating fish meat etc. with glucose and glucose oxidase/catalase type enzyme preparation, but this method aims at antioxidation of dye and prevention of color fading of dye, and does not describe or suggest improvement of mouthfeel.

Japanese Patent Laid-open No. 7-155153 discloses a method for prolonging shelf life of a proteinaceous processed food, such as that of shrimp, without impairing mouthfeel of the processed food, by immersing shrimp in a solution containing glycine, polyphosphoric acid salt, glucose oxidase, etc. However, this method aims at keeping such a food well for a longer period of time by using a food preserver, and it does not aim at intentionally improving the quality of a food, and does not give "resilience", "fibrous feel", and "satisfactory feel at the time of eating" of shrimp.

Japanese Patent No. 3591053 discloses a method of immersing frozen shelled shrimp in a solution of trisodium phosphate and then in a solution of transglutaminase and sodium casein. Although this method is an outstanding method, it is not sufficient for imparting "fibrous feel" to shrimp.

Japanese Patent No. 4344294 discloses a method for producing a lyophilized shrimp comprising immersing a shrimp in an aqueous solution containing glucose, glucose oxidase, and catalase, and then in an aqueous solution containing sodium hydrogencarbonate and/or polyphosphoric acid salt, then subjecting the shrimp to a boiling treatment, and lyophilizing the shrimp. This patent describes that the protein structure of the shrimp is three-dimensionally crosslinked by hydrogen peroxide generated by the glucose oxidase, and mouthfeel of fresh shrimp including both softness and firmness is obtained for shrimp to be restored with boiling water such as lyophilized shrimp. However, this method is for lyophilized shrimp used as an ingredient of instant noodles, and effect thereof for foods to be stored in a freezer after immersion and boiling, without being lyophilized, is not described.

Japanese Patent Laid-open No. 2003-61618 discloses a metal mineral-containing yeast, and many reports have been made for iron-containing yeast such as those of Japanese Patent Laid-open (KOKAI) Nos. 5-176758 and 2006-238878. However, all of them relate to health maintenance such as improvement of anemia, and Japanese Patent Laid-open Nos. 2003-61618, 5-176758, and 2006-238878 do not disclose any method for improving mouthfeel of processed aquatic food. LEE K: "Inhibition of browning reactions during storage of dried oyster (translated)", BULLETIN OF THE KOREAN FISHERIES SOCIETY, vol. 10, no. 1, 1977, pages 11 -15 discloses the use of glucose oxidase and yeast solutions for preserving raw oysters.
GRANT C L ET AL: "Minor element composition of yeast extract", JOURNAL OF BACTERIOLOGY, AMERICAN SOCIETY FOR MICROBIOLOGY, US, vol. 84, 1 October 1962 (1962-10-01), pages 869-870 discloses that yeast contains iron, magnesium and zinc.
JP S63 44866 A and DONDERO M ET AL.: "Glucose Oxidase/Catalase Improves Preservation of Shrimp (Heterocarpus reedi).", J. FOOD SCI., vol. 58, no. 4, 1993, pages 774-779 disclose the use of glucose oxidase for preserving aquatic food.
JP 2007 014248 A discloses the se of calcium oxide as alkaline agent in the field of aquatic food processing compositions.
DE 10 2005 051713 A1 discloses an association of yeast and glucose oxidase.
CHUN MING WONG ET AL: "Glucose oxidase: natural occurrence, function, properties and industrial applications", APPLIED MICROBIOLOGY AND BIOTECHNOLOGY, SPRINGER, BERLIN, DE, vol. 78, no. 6, 11 March 2008 (2008-03-1 1), pages 927-938 discloses yeasts including glucose oxidase.
CN 101 731 299 A discloses an additive blend including yeast, emulsifier, sodium bicarbonate, citric acid, alpha-amylase, glucose oxdase, lipoxidase and modified starch.

### Disclosure of the Invention

An object of the present invention is to provide a method for producing a processed aquatic food, and an enzyme preparation for modifying a property of a processed aquatic food, which can provide a processed aquatic food having the original natural physical properties via only a low temperature and short time reaction, against cases when the yield is improved by using an alkali agent such as pH adjustor for the processed aquatic food, or when the physical properties are impaired via freezing and thawing. In particular, an object of the present invention is to provide a method for maintaining the "fibrous feel" of the inside of shrimp for shrimp processed foods such as fried shrimp, or a method for preventing impairment of physical properties after freezing and thawing for processed products of shellfish such as Sakhalin surf clam (*Spisula sachalinensis*).

The inventors of the present invention conducted various researches, as a result, found that the aforementioned object can be achieved by using a glucose oxidase and a metal-containing yeast such as iron-containing yeast, and accomplished the present invention. The present invention thus provides the followings.
[1] A method for producing a processed aquatic food, which comprises adding a glucose oxidase and a metal-containing yeast to an aquatic raw material, wherein said metal is selected from zinc, magnesium or iron, and wherein the amount of said metal in the metal-containing yeast is 0.01 to 0.08 g per 1 g of the yeast in terms of dry weight.
[2] The method according to [1], which further comprises adding an alkaline agent.
[3] The method according to [2], wherein the alkaline agent is calcium oxide.
[4] The method according to any one of [1] to [3], which further comprises adding glucose.
[5] The method according to any one of [1] to [4], wherein the metal-containing yeast is an iron-containing yeast.
[6] The method according to [5], wherein the added amount of the glucose oxidase is 0.05 to 15 U per 1 g of the aquatic raw material, and the added amount of the iron-containing yeast is 0.00003 to 0.01 g in terms of dry weight per 1 g of the aquatic raw material.
[7] The method according to any one of [1] to [6], wherein the processed aquatic food is a shrimp processed food (prawn processed food) or shellfish processed product.
[8] An enzyme preparation for modifying a property of a processed aquatic food, which contains a glucose oxidase and a metal-containing yeast as active ingredients, wherein said metal is selected from zinc, magnesium or iron, and wherein the amount of said metal in the metal-containing yeast or iodine in the iodine-containing yeast is 0.01 to 0.08 g per 1 g of the yeast in terms of dry weight.
[9] The preparation according to [8], which further contains an alkaline agent as an active ingredient.
[10] The preparation according to [9], wherein the alkaline agent is calcium oxide.
[11] The preparation according to any one of [8] to [10], which further contains glucose as an active ingredient.
[12] The preparation according to any one of [8] to [11], wherein the metal-containing yeast is an iron-containing yeast.
[13] The preparation according to [12], wherein the contained amount of the iron-containing yeast in the enzyme preparation is 0.000002 to 0.2 g in terms of dry weight per 1 U of the glucose oxidase.

According to the present invention, mouthfeel of processed aquatic food typically including shrimp processed food and shellfish processed food can be improved only by immersion at low temperature for short time. As for shrimp processed food and shellfish processed food, it is also possible to produce a product having good quality by performing the reaction for a longer reaction time. In particular, "fibrous feel" of shrimp treated with a pH adjustor or phosphoric acid salt can be improved while maintaining the yield.

The processed aquatic food in the present invention means a food produced from an aquatic raw material, such as fish, shellfish, shrimp, crab, octopus, and squid, and specific examples include, for example, processed aquatic products such as shrimp processed foods and shellfish processed foods.

Examples of the shrimp processed foods in the present invention include boiled shrimp, fried shrimp, shrimp tempura, shrimp cutlet, and so forth. The examples further include frozen products, aseptically packaged products, retort products, dried products, and canned products produced by utilizing the foregoing shrimp processed food. The shrimp used as the raw material of the processed shrimp food in the present invention may be shrimp of any type, such as vannamei shrimp, black tiger shrimp, poovalan shrimp, white shrimp, and pink shrimp. Examples of the shellfish processed foods include shellfish processed food products of Sakhalin surf clam, ark shell (*Anadara broughtonii*), and so forth. The shellfish processed food may be a shellfish processed product that can be a shellfish processed product to be eaten raw or a shellfish processed product subjected to a heat treatment such as boiling.

For the method for producing a processed aquatic food and enzyme preparation for modifying a property of a processed aquatic food according to the present invention, a glucose oxidase and a metal-containing yeast are used. A glucose oxidase catalyzes a reaction that generates gluconic acid and hydrogen peroxide using glucose, oxygen, and water as substrates. Hydrogen peroxide generated by this reaction oxidizes SH groups in proteins to promote generation of SS bonds (disulfide bonds), and thereby a cross-linked structure is formed in the proteins. As the glucose oxidase, there are known those derived from various origins, e.g. microorganisms such as *Aspergillus oryzae,* plants, and so forth. The enzyme used in the present invention may be any enzyme so long as it has the glucose oxidase activity, and the origin thereof may be any organism. The enzyme may also be a recombinant enzyme. Examples include the glucose oxidase derived from microorganism marketed from Shin-Nihon Chemical Co., Ltd. with a trade name of "Sumizyme PGO". There are also many commercial products of glucose oxidase that are blended with catalase preparation, and the glucose oxidase may be such a mixture with another preparation, so long as the mixture has the glucose oxidase activity.

The metal-containing yeast used in the present invention is a yeast to which zinc, magnesium, or iron has been added as a nutrient, i.e. zinc-containing yeast, magnesium-containing yeast, and iron-containing yeast. Iron-containing yeast is preferred. The contained amount of metal in the metal-containing yeast in the present invention is 0.01 to 0.08 g, preferably 0.04 to 0.06 g, per 1 g of the yeast in terms of dry weight. The metal-containing yeast may be in the form of any of powder, paste, and suspension, and it may consist of live cells, or may be sterilized. Examples include the iron-containing yeast marketed by Sceti K.K. as a product belonging to the category of "metal-containing yeast", and iron-containing yeasts disclosed in Japanese Patent Laid-open Nos. 5-176758 and 2006-238878.

In the method for producing a processed aquatic food of the present invention, the added amount of glucose oxidase is preferably 0.05 to 15 U, more preferably 0.1 to 13 U, per 1 g of aquatic raw material such as shellfish and shrimp. If the added amount is lower than the above-mentioned range, the effect cannot be obtained in a significant degree. Also, if the added amount is higher than the above-mentioned range, the degree of the effectis not particularly altered, and hence, any merit on cost cannot be obtained. As for measurement of the glucose oxidase activity, a glucose oxidase is allowed to act on glucose as a substrate under the presence of oxygen to generate hydrogen peroxide, a peroxidase is allowed to act on the generated hydrogen peroxide under the presence of aminoantipyrine and phenol to generate a quinoneimine dye, and a color of the generated quinoneimine dye is measured at a wavelength of 500 nm to quantify the dye. The amount of the enzyme required for oxidizing 1 pmol of glucose in 1 minute is defined to be 1 U (unit).

In the method for producing a processed aquatic food of the present invention, the added amount of metal-containing yeast such as iron-containing yeast is preferably 0.00003 to 0.01 g, more preferably 0.0001 to 0.005 g, in terms of dry weight, per 1 g of aquatic raw material such as shellfish and shrimp. The added amount of metal-containing yeast is preferably 0.000002 to 0.2 g, more preferably 0.0000067 to 0.1 g, in terms of dry weight, per 1 U of glucose oxidase.

In the method for producing a processed aquatic food of the present invention, the glucose oxidase and metal-containing yeast such as iron-containing yeast may be added in any step of the production process. Further, the order of adding glucose oxidase and metal-containing yeast to the raw material and allowing them to act on the raw material is not particularly limited, and they may be added simultaneously or separately. For example, in the case of a shrimp processed food, the enzyme may be added to a solution for immersion in which shrimp is immersed for water absorption, or may be added before the heating step after the immersion. Further, the enzyme may also be allowed to act on shrimp after being heated by, for example, spraying an enzyme solution on the shrimp.

The reaction time for glucose oxidase is not particularly limited, so long as the enzyme can act on the substrate substances during the reaction time, and the enzyme may act for a very short time or for a long time. The reaction time actually used is preferably 1 minute to 24 hours, more preferably 5 minutes to 24 hours, still more preferably 5 minutes to 2 hours. Also, the reaction temperature is not particularly limited so long as the enzyme can maintain the activity at the reaction temperature. As for the temperature actually used, the enzyme is preferably allowed to act at 0 to 80°C. That is, sufficient reaction time can be secured by performing the usual immersion and heating steps.

Besides the glucose oxidase and metal-containing yeast, other enzymes such as transglutaminase and other substances may be used in combination. In particular, by using in combination an alkali agent such as sodium hydrogencarbonate, calcium oxide (calcined calcium), sodium carbonate, potassium carbonate, and phosphoric acid salt, it becomes possible to maintain the original mouthfeel of the food while improving the yield. The added amount of alkali salt such as calcium oxide is preferably 0.00001 to 0.05 g, more preferably 0.0001 to 0.01 g, per 1 g of aquatic raw material containing proteins such as shrimp. When these substances are used in combination, two-step immersion etc. is not required, and the effect can be obtained immediately after the addition, which also characterizes the present invention. Further, if glucose serving as the substrate of the glucose oxidase is added, the effect can be obtained with a smaller amount of the enzyme, and therefore the added amount of the enzyme can be reduced. In particular, when an aquatic raw material of a low glucose content such as shrimp is used, addition of glucose is desirable. In the case of a shrimp processed food, for example, the added amount of glucose is 0.0001 to 0.05 g, preferably 0.001 to 0.03 g, more preferably 0.005 to 0.01 g, per 1 g of raw material shrimp.

In the enzyme preparation for modifying a property of a processed aquatic food of the present invention, the blended amounts of the glucose oxidase and metal-containing yeast such as iron-containing yeast are larger than 0% and smaller than 100%. The amount of the metal-containing yeast such as iron-containing yeast per 1 U of glucose oxidase is preferably 0.000002 to 0.2 g, more preferably 0.0000067 to 0.1 g, in terms of dry weight. Furthermore, to the preparation, there may be added and blended a crosslinking enzyme such as transglutaminase, oxidase such as glucose oxidase, ascorbate oxidase, polyphenol oxidase, lysyl oxidase, and tyrosinase, excipient such as glucose, dextrin, starch, modified starch, and reduced malt sugar (maltitol), protein such as plant proteins, gluten, albumen, gelatin, and casein, seasoning or protein raw material such as sodium glutamate, animal extracts, fish extracts, protein hydrolysates, and protein partial decomposition products, alkali agent (pH adjustor) such as sodium carbonate, potassium carbonate, and calcium oxide, chelating agent such as gluconic acid and citric acid salt, oxidizing or reducing agent such as sodium ascorbate, glutathione, and cysteine, and other food additives such as alginic acid, brine, fat or oil, dye, acidulant, and perfume. The enzyme preparation of the present invention may be in the form of any of liquid, paste, granule, and powder.

### Brief Description of the Drawing

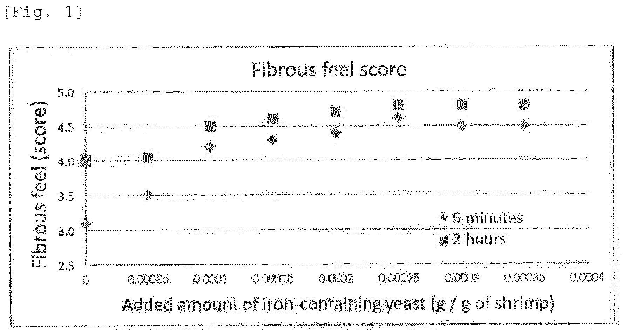

Fig. 1 shows the results of the organoleptic evaluation performed in Example 2 of the present invention for fibrous feel of boiled shrimp.

### Best Mode for Carrying out the Invention

Hereafter, the present invention will be explained in more detail with reference to examples.

### Example 1

Frozen shelled vannamei shrimp (26 to 30 shrimps/1 pound, size frequently used for fried shrimp) in an amount of 100 g were thawed with running water for 2 hours. To the thawed shrimp, city water, sodium chloride, and glucose in amounts shown in Table 1, the glucose oxidase preparation, "Sumizyme PGO" (product of Shin-Nihon Chemical Co., Ltd., henceforth also referred to as "GO"), and metal-containing yeasts in amounts shown in Table 2 were added and dissolved, and the resultant was mixed by tumbling at 4°C for 5 minutes. The metal-containing yeasts used are "Chromium-containing yeast" (containing 0.19% by weight of chromium, Sceti), "Calcium-containing yeast" (containing 5% by weight of calcium, Sceti), "Copper-containing yeast" (containing 0.9% by weight of copper, Sceti), "Selenium-containing yeast" (containing 0.09% by weight of selenium, Sceti), "Manganese-containing yeast" (containing 5% by weight of manganese, Sceti), "Molybdenum-containing yeast" (containing 0.2% by weight of molybdenum, Sceti), "Iodine-containing yeast" (containing 1.5% by weight of iodine, Sceti), "Zinc-containing yeast" (containing 5% by weight of zinc, Sceti), "Magnesium-containing yeast" (containing 5% by weight of magnesium, Sceti), and "Iron-containing yeast" (containing 5% by weight of iron, Sceti). After the tumbling, water was drained, the shrimp was subjected to heating by boiling at 95°C for 90 seconds in a thermostat, cooled with ice water for 60 seconds, and then weighted to calculate yield after heating. The yield after heating is represented with a value obtained by dividing the weight of shrimp after the heating with the weight of the shrimp before the immersion. Further, pH of the solution remained after the immersion of the shrimp was measured. Furthermore, in order to confirm mouthfeel of the shrimp after the heating, "fibrous feel" was evaluated by organoleptic evaluation performed by five persons in charge, and the results were represented with scores of from 0 to 5 points increasing 0.5-point unit. The evaluation scores used in the table mentioned below means as follows: 5, very good; 4, fairly good; 3, good; 2, slightly bad; and 1, bad, and the scores are averages of the scores of the five persons. The "fibrous feel" was defined as strength of resilience repeatedly and intermittently sensed with teeth for many layers at the time of biting the product.

**Table 1**

| Raw material | Amount based on shrimp (%) | Amount based on total weight (%) | Blended amount (g) |
|---|---|---|---|
| Frozen vannamei shrimp | 100% | 75.8% | 100 |
| Sodium chloride | 1% | 0.8% | 1 |
| Glucose | 1% | 0.8% | 1 |
| Water | 30% | 22.7% | 30 |
| Total | 132% | 100.0% | 132 |

**Table 2**

| | Added amount (per 1 g of raw material shrimp) | |
|---|---|---|
| Test group | Metal-containing yeast | GO |
| #1 | No addition | No addition |
| #2 | No addition | 0.308 U |
| #3 * | Chromium-containing yeast 0.000024 g | 0.308 U |
| #4 * | Calcium-containing yeast 0.00025 g | 0.308 U |
| #5 * | Copper-containing yeast 0.00025 g | 0.308 U |
| #6 * | Selenium-containing yeast 0.000024 g | 0.308 U |
| #7 * | Manganese-containing yeast 0.00025 g | 0.308 U |
| #8 * | Molybdenum-containing yeast 0.00005 g | 0.308 U |
| #9 * | Iodine-containing yeast 0.000141 g | 0.308 U |
| #10 | Zinc-containing yeast 0.00025 g | 0.308 U |
| #11 | Magnesium-containing yeast 0.00025 g | 0.308 U |
| #12 | Iron-containing yeast 0.00025 g | 0.308 U |

| | | |
|---|---|---|
| * Reference only | | |

The results are shown in Table 3. As shown in Table 3, when 0.308 U of GO alone was added per 1 g of shrimp, the "fibrous feel" was hardly improved with such tumbling at low temperature for short time as 4°C for 5 minutes. In contrast to the case of adding GO alone, when yeast containing zinc, magnesium, or iron was used in combination with GO, the "fibrous feel" was improved even with the reaction at low temperature for short time. In particular, marked improvement degree of fibrous feel was obtained with the iron-containing yeast.

**Table 3**

| Test group | | Fibrous feel | pH | Yield |
|---|---|---|---|---|
| #1 | No addition | 3.0 | 7.3 | 76.4% |
| #2 | GO | 3.1 | 7.1 | 73.8% |
| #3 * | GO + Chromium-containing yeast | 2.6 | 7.0 | 75.9% |
| #4 * | GO + Calcium-containing yeast | 2.7 | 7.0 | 75.4% |
| #5 * | GO + Copper-containing yeast | 2.9 | 6.9 | 76.0% |
| #6 * | GO + Selenium-containing yeast | 3.0 | 7.0 | 76.7% |
| #7 * | GO + Manganese-containing yeast | 3.0 | 7.1 | 75.7% |
| #8 * | GO + Molybdenum-containing yeast | 3.0 | 7.0 | 77.4% |
| #9 * | GO + Iodine-containing yeast | 3.0 | 6.9 | 77.0% |
| #10 | GO + Zinc-containing yeast | 3.8 | 7.0 | 76.5% |
| #11 | GO + Magnesium-containing yeast | 4.4 | 7.0 | 76.3% |
| #12 | GO + Iron-containing yeast | 4.5 | 6.9 | 74.1% |

| | | | | |
|---|---|---|---|---|
| * Reference only | | | | |

### Example 2

In the iron-containing yeast addition test group, marked effect of the addition was confirmed even with the reaction at low temperature for short time (4°C, 5 minutes). Therefore, the added amount was evaluated. In the same manner as that of Example 1, to thawed shrimp, city water, sodium chloride, and glucose in amounts shown in Table 1, GO and iron-containing yeast in amounts shown in Table 4 were added and dissolved, and the resultant was mixed by tumbling at 4°C for 5 minutes to produce boiled shrimp. Furthermore, comparative examples were also performed with tumbling at 4°C for a prolonged time, i.e., 2 hours. This tumbling time of 2 hours assumes the time of mixing with a shrimp modifier used in a shrimp processed food manufacturing company. In order to confirm mouthfeel of the shrimp after heating, the "fibrous feel" was evaluated by the same organoleptic evaluation method as that of Example 1.

**Table 4**

| | Added amount (per 1 g of raw material shrimp) | |
|---|---|---|
| Test group | Iron-containing yeast | GO |
| #1 | No addition | No addition |
| #2 | No addition | 0.308 U |
| #3 | 0.00005 g | 0.308 U |
| #4 | 0.00010 g | 0.308 U |
| #5 | 0.00015 g | 0.308 U |
| #6 | 0.00020 g | 0.308 U |
| #7 | 0.00025 g | 0.308 U |
| #8 | 0.00030 g | 0.308 U |
| #9 | 0.00035 g | 0.308 U |
| #10 | 0.01 g | No addition |

The results are shown in Table 5 and Fig. 1. With the tumbling at 4°C for 5 minutes, in the test group of #2 where only GO was added, and the test group of #10 where only the iron-containing yeast was added, the fibrous feel was not improved. In contrast, in the test groups where the iron-containing yeast was added, difference was observed from the test group of #3, and definite improvement in the property was observed in the test group of #4 even with tumbling for a short time, at 4°C for 5 minutes. Further, it was also possible to produce a shrimp processed food showing high fibrous feel by the reaction for 2 hours.

**Table 5**

| Test group | | #1 | #2 | #3 | #4 | #5 | #6 | #7 | #8 | #9 | #10 |
|---|---|---|---|---|---|---|---|---|---|---|---|
| Fibrous feel | 5 Minutes | 3.0 | 3.1 | 3.5 | 4.2 | 4.3 | 4.4 | 4.6 | 4.5 | 4.5 | 3.0 |
| | 2 Hours | 3.0 | 4.0 | 4.1 | 4.5 | 4.6 | 4.7 | 4.8 | 4.8 | 4.8 | 3.0 |
| pH after 2 hours | | 7.07 | 6.92 | 6.77 | 6.70 | 6.81 | 6.83 | 6.74 | 6.88 | 6.83 | 7.10 |
| Yield after 2 hours | | 74% | 71% | 69% | 69% | 72% | 72% | 73% | 75% | 75% | 73% |

### Example 3

If calcined calcium, which is an alkali material, is used, the yield is improved, but a problem arises that the mouthfeel becomes flabby. In order to solve this problem, the technique of the present invention was used to obtain both good yield and mouthfeel. In the same manner as that of Example 1, to thawed shrimp, city water, sodium chloride, and glucose in amounts shown in Table 1, GO, iron-containing yeast, and calcined calcium in amounts shown in Table 6 were added and dissolved, and the resultant was mixed by tumbling at 4°C for 2 hours to produce boiled shrimp. In order to confirm mouthfeel of the shrimp after heating, the "fibrous feel" was evaluated by the same organoleptic evaluation method as that of Example 1. Furthermore, comprehensive evaluation was performed on the basis of the "fibrous feel", yield, and cost. When good results were obtained for all of fibrous feel, yield, and cost, the results are indicated with the symbol A. When good result was obtained for the fibrous feel, but bad result was obtained for yield or cost, the results are indicated with the symbol B. When the fibrous feel was improved but insufficient, and good result was obtained for yield or cost, the results are indicated with the symbol C. When good results were obtained for yield and cost, but the fibrous feel was extremely bad, the results are indicated with the symbol D.

**Table 6**

| | Added amount (per 1 g of raw material shrimp) | | |
|---|---|---|---|
| Test group | Iron-containing yeast | GO | Calcined Ca |
| #1 | No addition | No addition | No addition |
| #2 | No addition | No addition | 0.0006 g |
| #3 | No addition | 0.308 U | 0.0006 g |
| #4 | 0.00001 g | 0.308 U | 0.0006 g |
| #5 | 0.00003 g | 0.308 U | 0.0006 g |
| #6 | 0.00004 g | 0.308 U | 0.0006 g |
| #7 | 0.00008 g | 0.308 U | 0.0006 g |
| #8 | 0.0001 g | 0.308 U | 0.0006 g |
| #9 | 0.0002 g | 0.308 U | 0.0006 g |
| #10 | 0.001 g | 0.308 U | 0.0006 g |
| #11 | 0.01 g | 0.308 U | 0.0006 g |
| #12 | 0.02 g | 0.308 U | 0.0006 g |

The results are shown in Table 7. In the test group of #1 where any of the ingredients was not added, the original "fibrous feel" of shrimp was sensed, and that is, the product showed superior mouthfeel, but the yield was low, which results in increase of the production cost. On the other hand, the product of the test group of #2 to which the calcined Ca and Go were added showed improved yield of shrimp because of the action of the alkali, but the mouthfeel became flabby due to absorption of water. In contrast, the products of the test group of #5 to #11, to which the calcined Ca, GO, and iron-containing yeast were added in combination, showed good results for both the yield and "fibrous feel", and thus they were preferred. Further, the "fibrous feel" imparting effect was sufficiently effectively obtained in these test groups even with the reaction at low temperature for short time, and thus it enables continuous production on production sites. The test group of #12 showed a lower yield than that of the test group of #11. That is, addition of the iron-containing yeast in an amount exceeding 0.01 g per 1 g of shrimp simply imposed excessive cost, and did not provide any better result. On the basis of these results, the added amount of the iron-containing yeast that can impart preferred "fibrous feel" with improving the yield is determined to be 0.00003 to 0.01 g per 1 g of raw material shrimp.

**Table 7**

| Test group | Fibrous feel | pH | Yield | Total evaluation | Note |
|---|---|---|---|---|---|
| #1 | 3.0 | 7.07 | 58.8% | B | Fibrous feel was objective level, but yield was low. |
| #2 | 1.0 | 9.74 | 84.0% | D | Yield was high, but the product had no fibrous feel, and gave flabby mouthfeel. |
| #3 | 1.5 | 8.74 | 75.9% | C | Fibrous feel was improved while was not objective level, but yield was improved. |
| #4 | 2.1 | 8.75 | 76.6% | C | Fibrous feel was improved while was not objective level, but yield was improved. |
| #5 | 3.0 | 8.64 | 76.1% | A | Objective improvement of fibrous feel was attained, and yield was also improved. |
| #6 | 3.3 | 8.74 | 74.7% | A | |
| #7 | 3.4 | 8.83 | 78.2% | A | |
| #8 | 3.5 | 8.79 | 76.9% | A | |
| #9 | 4.0 | 8.68 | 75.4% | A | |
| #10 | 4.0 | 8.56 | 74.3% | A | |
| #11 | 4.8 | 8.67 | 77.1% | A | |
| #12 | 4.8 | 8.78 | 75.5% | B | Effect was not obtained in a degree balanced with cost required for increasing amount of the enzyme. |

### Example 4

Further, in order to evaluate the addition ratio of glucose oxidase, in the same manner as that of Example 1, to thawed shrimp, city water, sodium chloride, and glucose in amounts shown in Table 1, GO, iron-containing yeast, and calcined calcium in amounts shown in Table 8 were added and dissolved, and the resultant was mixed by tumbling at 4°C for 2 hours to produce boiled shrimp. In order to confirm mouthfeel of the shrimp after heating, the "fibrous feel" was evaluated by the same organoleptic evaluation method as that of Example 1. It had been found that the yield was sufficiently improved by addition of calcined calcium as shown in results of Table 7, and such sufficient improvement effect was also confirmed in the test groups of this example. The test groups for which the fibrous feel-improving effect was confirmed are indicated with gray color, and among such groups, the groups that showed an organoleptic evaluation score exceeding 3, which is the objective fibrous feel equivalent to those of the tests of which results are shown in Tables 6 and 7, are indicated with the symbol *.

**Table 8**

| Test group No. | #1 | #2 | #3 | #4 | #5 | #6 | #7 | #8 |
|---|---|---|---|---|---|---|---|---|
| GO (U/g of food) | 0.000 | 0.030 | 0.050 | 0.100 | 1.000 | 2.000 | 15.000 | 16.000 |
| Iron-containing yeast (g/g of food) | 0.00000 | 0.00000 | 0.00000 | 0.00000 | 0.00000 | 0.00000 | 0.00000 | 0.00000 |

| Test group No. | #9 | #10 | #11 | #12 | #13 | #14 | #15 | #16 |
|---|---|---|---|---|---|---|---|---|
| GO (U/g of food) | 0.000 | 0.030 | 0.050 | 0.100 | 1.000 | 2.000 | 15.000 | 16.000 |
| Iron-containing yeast (g/g of food) | 0.00001 | 0.00001 | 0.00001 | 0.00001 | 0.00001 | 0.00001 | 0.00001 | 0.00001 |

| Test group No. | #17 | #18 | #19 | #20 | #21 | #22 | #23 | #24 |
|---|---|---|---|---|---|---|---|---|
| GO (U/g of food) | 0.000 | 0.030 | 0.050 | 0.100 | 1.000 | 2.000 | 15.000 | 16.000 |
| Iron-containing yeast (g/g of food) | 0.00003 | 0.00003 | 0.00003 | 0.00003 | 0.00003 | 0.00003 | 0.00003 | 0.00003 |

| Test group No. | #25 | #26 | #27 | #28 | #29 | #30 | #31 | #32 |
|---|---|---|---|---|---|---|---|---|
| GO (U/g of food) | 0.000 | 0.030 | 0.050 | 0.100 | 1.000 | 2.000 | 15.000 | 16.000 |
| Iron-containing yeast (g/g of food) | 0.00010 | 0.00010 | 0.00010 | 0.00010 | 0.00010 | 0.00010 | 0.00010 | 0.00010 |

| Test group No. | #33 | #34 | #35 | #36 | #37 | #38 | #39 | #40 |
|---|---|---|---|---|---|---|---|---|
| GO (U/g of food) | 0.000 | 0.030 | 0.050 | 0.100 | 1.000 | 2.000 | 15.000 | 16.000 |
| Iron-containing yeast (g/g of food) | 0.00100 | 0.00100 | 0.00100 | 0.00100 | 0.00100 | 0.00100 | 0.00100 | 0.00100 |

| Test group No. | #41 | #42 | #43 | #44 | #45 | #46 | #47 | #48 |
|---|---|---|---|---|---|---|---|---|
| GO (U/g of food) | 0.000 | 0.030 | 0.050 | 0.100 | 1.000 | 2.000 | 15.000 | 16.000 |
| Iron-containing yeast (g/g of food) | 0.01000 | 0.01000 | 0.01000 | 0.01000 | 0.01000 | 0.01000 | 0.01000 | 0.01000 |

| Test group No. | #49 | #50 | #51 | #52 | #53 | #54 | #55 | #56 |
|---|---|---|---|---|---|---|---|---|
| GO (U/g of food) | 0.000 | 0.030 | 0.050 | 0.100 | 1.000 | 2.000 | 15.000 | 16.000 |
| Iron-containing yeast (g/g of food) | 0.02000 | 0.02000 | 0.02000 | 0.02000 | 0.02000 | 0.02000 | 0.02000 | 0.02000 |

The results arc shown in Table 9. It was found that addition of 0.05 to 16 U of GO per 1 g of the aquatic raw material and 0.00003 to 0.02 g of the iron-containing yeast per 1 g of the raw material shrimp provided significant effect. However, as already shown in Table 7, even if added amounts of GO and the iron-containing yeast were unduly increased, only the cost increased, and no better effect was obtained. Amounts of 0.05 to 15 U of GO and 0.00003 to 0.01 g of the iron-containing yeast were sufficient, and favorable "fibrous feel" could be imparted with such amounts.

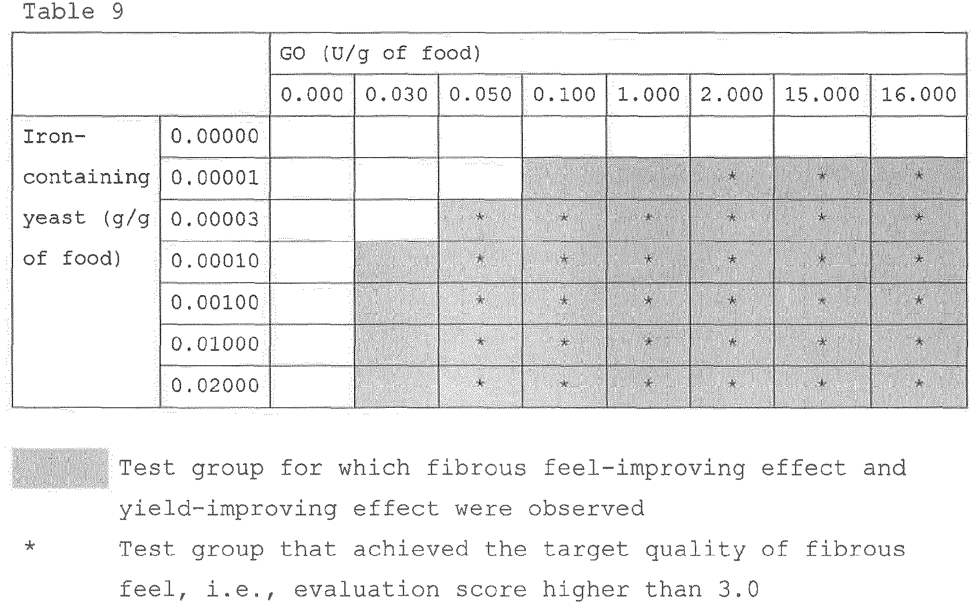

### Example 5

The effect of the preparation was further examined for Sakhalin surf clams. If discussion is focused on distribution of domestic Sakhalin surf clams, since catching of Sakhalin surf clams is concentrated to the limited catching season, after catching of "raw Sakhalin surf clams", they must be frozen without or after a heat treatment, and then distributed, for long term storage. However, freezing of Sakhalin surf clams without a heat treatment gives damage to mouthfeel of the Sakhalin surf clams, and deteriorates the original mouthfeel into unsatisfactory mouthfeel lacking resilience (internal fibrous feel). If raw shucked shellfish is frozen, and then thawed and eaten raw (as sliced raw shellfish etc.) or eaten after heat cooking, the mouthfeel thereof is unsatisfactory one lacking elasticity and resistance to the teeth. Therefore, they are currently distributed after being subjected to a heat treatment and frozen. That is, edible raw frozen product of the clams is not distributed in the markets. Further, if the clams are frozen after heating, they cannot be differentiated from overseas import products (mainly produced in Canada), and commodity value is also reduced. Therefore, if damage to the mouthfeel of the clams can be suppressed, and the mouthfeel giving resilience (internal fibrous feel) can be maintained even after the clams are frozen without subjecting them to a heat treatment, quality concerning mouthfeel thereof can be differentiated from that of overseas import products, and commodity value is increased.

Sakhalin surf clams are shelled, weighed in 100 g for each test group, and filled in a pouch, and the additive materials were added as powder as defined for the test groups shown in Table 10. Then, they were mixed by hand, vacuumed by degassing, and stored under refrigeration for 18 hours. After the storage under refrigeration, they were quickly frozen with a quick freezing machine (-40°C) and thawed to obtain edible raw Sakhalin surf clams, which were subjected to organoleptic evaluation for internal resilience (equivalent to the internal fibrous feel referred to for shrimp). The organoleptic evaluation was performed by three persons in charge, and the results are indicated with the following symbols: A, modification effect was significant, which means extremely preferred result; B, modification effect was obtained, which means preferred result; C, modification effect was weak, which does not mean preferred result; and D, modification effect was not observed.

**Table 10**

| Test group | #1 | #2 | #3 | #4 | #5 |
|---|---|---|---|---|---|
| Frozen or not frozen | Not frozen | Frozen | Frozen | Frozen | Frozen |
| GO (U/g of shellfish, containing 15% glucose based on shellfish) | 0 | 0 | 12.6 | 0 | 12.6 |
| Iron-containing yeast (g/g of shellfish) | 0 | 0 | 0 | 0.0016 | 0.0016 |

The results are shown in Table 11. As shown in the results of Table 11, it was found that combinatory use of GO and iron-containing yeast provides improvement of resilience (internal fibrous feel) even for frozen and thawed Sakhalin surf clams, i.e., significant property-imparting effect, and provides preferred mouthfeel. As described above, it was found that the preparation can comprehensively improve properties of processed aquatic food including not only those of shrimp, but also those of shellfish etc.

**Table 11**

| Test group | #1 | #2 | #3 | #4 | #5 |
|---|---|---|---|---|---|
| Resilience (internal fibrous feel) | A | D | C | D | B |

### Industrial Applicability

According to the present invention, quality of processed aquatic food can be improved, and thus the present invention is extremely useful in the field of food industry.

## Claims

1. A method for producing a processed aquatic food, which comprises adding a glucose oxidase and a metal-containing yeast to an aquatic raw material, wherein said metal is selected from zinc, magnesium or iron, and wherein the amount of said metal in the metal-containing yeast is 0.01 to 0.08 g per 1 g of the yeast in terms of dry weight.

2. The method according to claim 1, which further comprises adding an alkaline agent.

3. The method according to claim 2, wherein the alkaline agent is calcium oxide.

4. The method according to any one of claims 1 to 3, which further comprises adding glucose.

5. The method according to any one of claims 1 to 4, wherein the metal-containing yeast is an iron-containing yeast.

6. The method according to claim 5, wherein the added amount of the glucose oxidase is 0.05 to 15 U per 1 g of the aquatic raw material, and the added amount of the iron-containing yeast is 0.00003 to 0.01 g in terms of dry weight per 1 g of the aquatic raw material.

7. The method according to any one of claims 1 to 6, wherein the processed aquatic food is a shrimp processed food (prawn processed food) or shellfish processed product.

8. An enzyme preparation for modifying a property of a processed aquatic food, which contains a glucose oxidase and a metal-containing yeast as active ingredients, wherein said metal is selected from zinc, magnesium or iron, and wherein the amount of said metal in the metal-containing yeast or iodine in the iodine-containing yeast is 0.01 to 0.08 g per 1 g of the yeast in terms of dry weight.

9. The preparation according to claim 8, which further contains an alkaline agent as an active ingredient.

10. The preparation according to claim 9, wherein the alkaline agent is calcium oxide.

11. The preparation according to any one of claims 8 to 10, which further contains glucose as an active ingredient.

12. The preparation according to any one of claims 8 to 11, wherein the metal-containing yeast is an iron-containing yeast.

13. The preparation according to claim 12, wherein the contained amount of the iron-containing yeast in the enzyme preparation is 0.000002 to 0.2 g in terms of dry weight per 1 U of the glucose oxidase.

## Patentansprüche

1. Verfahren zur Herstellung eines aquatischen Nahrungsmittels, umfassend das Zugeben einer Glucoseoxidase und einer metallhaltigen Hefe zu einem aquatischen Ausgangsmaterial, wobei das Metall unter Zink, Magnesium oder Eisen ausgewählt ist und die Menge des Metalls in der metallhaltigen Hefe 0,01 bis 0,08 g pro 1 g der Hefe in Bezug auf das Trockengewicht beträgt.

2. Verfahren nach Anspruch 1, das ferner die Zugabe eines alkalischen Mittels umfasst.

3. Verfahren nach Anspruch 2, wobei das alkalische Mittel Calciumoxid ist.

4. Verfahren nach einem der Ansprüche 1 bis 3, das ferner die Zugabe von Glukose umfasst.

5. Verfahren nach einem der Ansprüche 1 bis 4, worin die metallhaltige Hefe eine eisenhaltige Hefe ist.

6. Verfahren nach Anspruch 5, worin die zugegebene Menge der Glucoseoxidase 0,05 bis 15 U pro 1 g des aquatischen Ausgangsmaterials und die zugegebene Menge der eisenhaltigen Hefe 0,00003 bis 0,01 g, bezogen auf das Trockengewicht pro 1 g des aquatischen Ausgangsmaterials, beträgt.

7. Verfahren nach einem der Ansprüche 1 bis 6, worin das verarbeitete aquatische Nahrungsmittel ein von Garnelen verarbeitetes Nahrungsmittel (von Krabben verarbeitetes Nahrungsmittel) oder ein von Muscheln verarbeitetes Produkt ist.

8. Enzympräparat zur Modifizierung einer Eigenschaft eines verarbeiteten aquatischen Nahrungsmittels, das eine Glucoseoxidase und eine metallhaltige Hefe als aktive Bestandteile enthält, wobei das Metall unter Zink, Magnesium oder Eisen ausgewählt ist und die Menge des Metalls in der metallhaltigen Hefe oder in der jodhaltigen Hefe 0,01 bis 0,08 g pro 1 g der Hefe, bezogen auf das Trockengewicht, beträgt.

9. Zubereitung nach Anspruch 8, die weiterhin ein alkalisches Mittel als Wirkstoff enthält.

10. Zubereitung nach Anspruch 9, wobei das alkalische Mittel Calciumoxid ist.

11. Zubereitung nach einem der Ansprüche 8 bis 10, die weiterhin Glukose als Wirkstoff enthält.

12. Herstellung nach einem der Ansprüche 8 bis 11, worin die metallhaltige Hefe eine eisenhaltige Hefe ist.

13. Zubereitung nach Anspruch 12, worin die enthaltene Menge der eisenhaltigen Hefe in der Enzymzubereitung 0,000002 bis 0,2 g, bezogen auf das Trockengewicht pro 1 U der Glucoseoxidase, beträgt.

## Revendications

1. Procédé de production d'un aliment transformé d'origine aquatique, qui comprend l'ajout d'une glucose oxydase et d'une levure contenant un métal à une matière première d'origine aquatique, dans lequel ledit métal est choisi parmi le zinc, le magnésium ou le fer, et dans lequel la quantité dudit métal dans la levure contenant un métal est de 0,01 à 0,08 g pour 1 g de la levure en termes de poids sec.

2. Procédé selon la revendication 1, qui comprend en outre l'ajout d'un agent alcalin.

3. Procédé selon la revendication 2, dans lequel l'agent alcalin est de l'oxyde de calcium.

4. Procédé selon l'une quelconque des revendications 1 à 3, qui comprend en outre l'ajout de glucose.

5. Procédé selon l'une quelconque des revendications 1 à 4, dans lequel la levure contenant un métal est une levure contenant du fer.

6. Procédé selon la revendication 5, dans lequel la quantité ajoutée de la glucose oxydase est de 0,05 à 15 U pour 1 g de la matière première d'origine aquatique, et la quantité ajoutée de la levure contenant du fer est de 0,00003 à 0,01 g en termes de poids sec pour 1 g de la matière première d'origine aquatique.

7. Procédé selon l'une quelconque des revendications 1 à 6, dans lequel l'aliment transformé d'origine aquatique est un aliment transformé à base de crevettes (aliment transformé à base de gambas) ou un produit transformé à base de fruits de mer.

8. Préparation enzymatique pour modifier une propriété d'un aliment transformé d'origine aquatique, qui contient une glucose oxydase et une levure contenant un métal en tant que substances actives, dans laquelle ledit métal est choisi parmi le zinc, le magnésium ou le fer, et dans laquelle la quantité dudit métal dans la levure contenant un métal ou de l'iode dans la levure contenant de l'iode est de 0,01 à 0,08 g pour 1 g de la levure en termes de poids sec.

9. Préparation selon la revendication 8, qui contient en outre un agent alcalin en tant que substance active.

10. Préparation selon la revendication 9, dans laquelle l'agent alcalin est de l'oxyde de calcium.

11. Préparation selon l'une quelconque des revendications 8 à 10, qui contient en outre du glucose en tant que substance active.

12. Préparation selon l'une quelconque des revendications 8 à 11, dans laquelle la levure contenant un métal est une levure contenant du fer.

13. Préparation selon la revendication 12, dans laquelle la quantité contenue de la levure contenant du fer dans la préparation enzymatique est de 0,000002 à 0,2 g en termes de poids sec pour 1 U de la glucose oxydase.
